# FASCICULE DE BREVET EUROPEEN

(11) **EP 0 588 694 B1**
(45) Date de publication et mention de la délivrance du brevet: **02.06.1999**
(21) Numéro de dépôt: 93402193.2
(22) Date de dépôt: 09.09.1993
(51) Int. Cl.: B60G 3/20, B60G 7/02

(54) **Train arrière à roues indépendantes pour véhicule automobile**
Hinterradaufhängung für Kraftfahrzeug mit unabhängigen Rädern
Rear suspension for motor vehicle with independent wheels

(30) Priorité: 15.09.1992 FR 9210984
(43) Date de publication de la demande: 23.03.1994
(73) Titulaire: RENAULT, 92109 Boulogne-Billancourt (FR)
(72) Inventeur: Veneau, Jean, F-92500 Rueil Malmaison (FR)

(56) Documents cités:
- EP-A- 0 141 092
- EP-A- 0 182 606
- EP-A- 0 199 915
- EP-A- 0 246 133
- EP-A- 0 306 625
- DE-A- 3 119 777
- DE-A- 3 843 613
- DE-C- 3 507 081
- FR-A- 2 563 167

## Description

La présente invention concerne un train arrière à roues indépendantes pour véhicule automobile et présentant notamment un caractère sous-vireur.

On sait que le comportement routier d'un véhicule automobile dépend de la dérive des trains arrière du véhicule, c'est-à-dire de la modification de l'orientation des plans des roues arrière due à des efforts d'accélération, de freinage ou de ripage.

Lorsque la dérive des trains arrière est négative, c'est-à-dire que les plans des roues arrière convergent vers l'avant du véhicule, on obtient un bon comportement routier du véhicule. Cette convergence des plans des roues arrière sous efforts, appelée également pince induite, confère aux trains arrière un caractère sous-vireur. Pour obtenir un tel résultat, le train arrière du véhicule doit être conçu pour que le centre instantané de pivotement de la roue arrière par rapport au châssis du véhicule se situe à l'extérieur du plan de roue arrière et derrière le plan vertical passant par l'axe de l'essieu arrière.

On connaît par le brevet français 2 366 947 un train arrière sous-vireur comprenant un bras inférieur longitudinal dont l'extrémité avant coopère avec une mini biellette articulée sur le châssis du véhicule. Une lame flexible transversale présente une extrémité soudée sur le bras inférieur. L'autre extrémité de la lame flexible s'articule sur le châssis du véhicule. La technique proposée dans ce document présente les inconvénients suivants: l'effet compensateur faible de la charge au freinage; l'impossibilité d'utiliser le bras inférieur comme support de la charge sous peine de surcontraindre les articulations élastiques dans leur vocation de déformation orientée; le problème de stabilité de la lame flexible soudée au corps du bras inférieur dans le cas de forces latérales (flambement); l'articulation de la mini biellette d'une part sur le châssis et d'autre part dans la partie avant du bras inférieur difficile à maîtriser.

On connaît en outre par le brevet français 2 645 475 une suspension arrière de type Mac-Pherson ou double triangle pour véhicules automobiles. La suspension comprend deux biellettes inférieures rigides de longueurs inégales et convergentes, une bielle supérieure de carrossage et une bielle longitudinale. La technique décrite permet d'arriver à obtenir d'une façon satisfaisante la pince induite, mais présente cependant l'inconvénient de nécessiter quatre points de fixation du train arrière sur le châssis, ce qui augmente le coût de montage du train arrière et réduit l'espace disponible sous le plancher du véhicule.

La publication EP-141092 décrit un train de suspension pour véhicule automobile dont le support de roue est relié à la carrosserie par trois bras oscillants articulés sur celle-ci dont l'un est un bras longitudinal et les deux autres sont des bras transversaux. Un tel train nécessite quatre points de liaison entre la roue et la structure du véhicule.

La présente invention a pour objet de remédier aux inconvénients des techniques classiques en proposant un train arrière sous-vireur pour véhicules, notamment pour véhicules automobiles, de conception simple, compact et économique.

Le train arrière selon l'invention, comprend un porte-fusée, un amortisseur hydraulique, un ressort hélicoïdal ou pneumatique de suspension, une bielle de carrossage supérieure transversale, un bras inférieur longitudinal un bras inférieur transversal et une biellette de connexion entre le bras inférieur longitudinal et le bras inférieur transversal Le bras inférieur transversal est un bras porteur qui soutient l'extrémité inférieure du ressort hélicoïdal de suspension.

De préférence, la biellette de connexion est orientée sensiblement verticalement avec son extrémité inférieure articulée autour d'un bossage de la partie arrière du bras inférieur longitudinal et son extrémité supérieure articulée par rapport au bras porteur inférieur.

Selon l'invention, l'amortisseur hydraulique agit entre le châssis du véhicule et le porte-fusée séparément du ressort hélicoïdal de suspension qui agit entre le châssis et le bras porteur inférieur. Le bras inférieur longitudinal se trouve devant le bras porteur inférieur transversal dans le sens de la marche du véhicule.

Avantageusement, la partie arrière du bras inférieur longitudinal présente une ouverture transversale à travers laquelle l'amortisseur agit sur le porte-fusée.

De préférence, la bielle supérieure de carrossage est cintrée vers le bas de façon à pouvoir éviter le contact mécanique avec le châssis, en particulier avec le longeron du véhicule.

L'invention sera mieux comprise à l'étude de la description détaillée d'un mode de réalisation pris à titre nullement limitatif et illustré par des dessins annexés, sur lesquels :

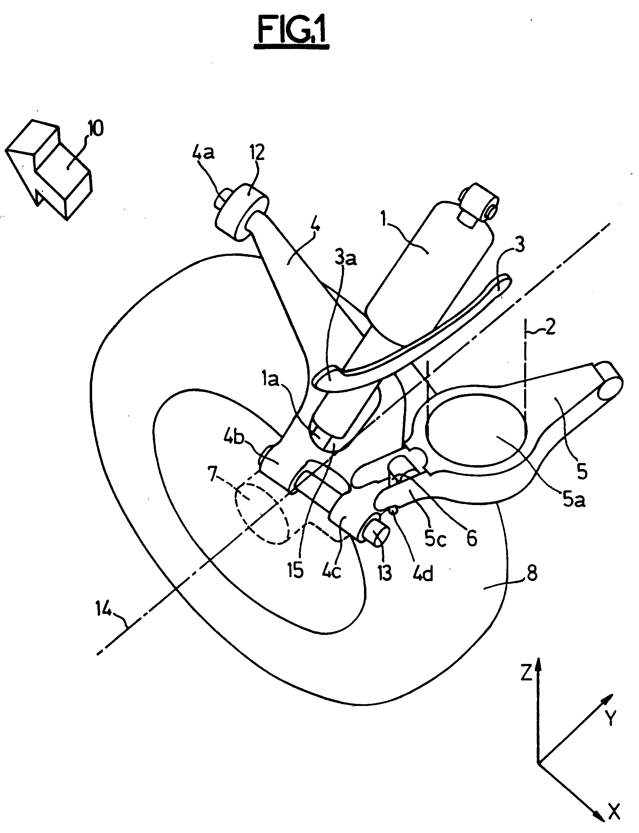

la figure 1 est une vue schématique en perspective d'un train arrière gauche selon l'invention,
la figure 2 est une vue schématique de dessus du train de la figure 1,
la figure 3 est une vue schématique de devant du train de la figure 1, et
la figure 4 est une vue de dessus avec coupe partielle du bras inférieur longitudinal du train de la figure 2.

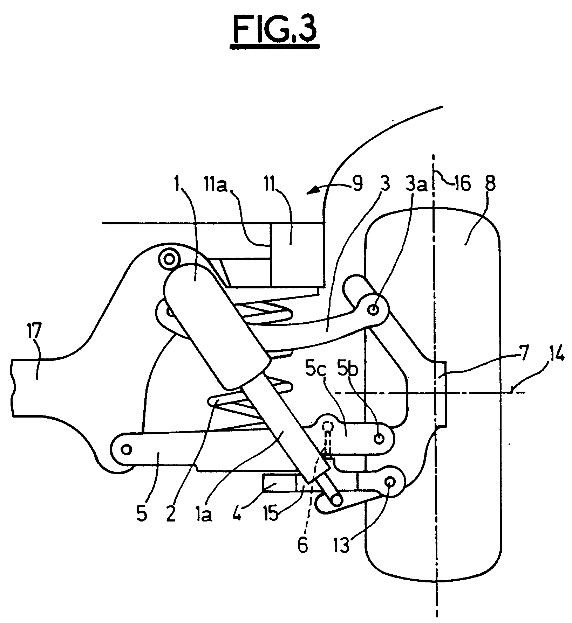

Tel qu'illustré sur les figures, le train arrière de l'invention comprend un amortisseur 1 hydraulique, un ressort hélicoïdal 2 de suspension qui peut être également un ressort pneumatique, une bielle de carrossage 3, un bras inférieur longitudinal 4, un bras inférieur transversal 5 et une biellette de connexion 6. L'amortisseur 1, la bielle de carrossage 3 et les bras inférieurs longitudinal 4 et transversal 5 sont montés en articulation entre un porte-fusée 7 supportant la roue arrière gauche 8 du véhicule et le châssis 9 du véhicule (figure 3). La flèche 10 indique le sens vers l'avant du véhicule non représenté.

A part l'amortisseur 1 et le ressort hélicoïdal 2 qui sont indispensables pour tous les trains arrière de véhicules automobiles, le train arrière de l'invention présente trois points de fixation par rapport au châssis. Les points de fixation sont constitués par l'extrémité avant du bras inférieur longitudinal 4, une extrémité de la bielle de carrossage 3 et une extrémité du bras inférieur transversal 5.

Le bras inférieur longitudinal 4 présente son extrémité avant 4a montée de façon articulée sur le longeron gauche 11 faisant partie du châssis 9 du véhicule. Le montage peut être effectué au moyen d'un palier élastique 12 démontable. La partie d'extrémité arrière du bras longitudinal 4 pivote en deux points 4b et 4c autour d'un axe sensiblement horizontal 13 et incliné par rapport à la direction longitudinale et rendu solidaire du porte-fusée 7, et présente un bossage intérieur 4d autour duquel s'articule l'extrémité inférieure de la biellette de connexion 6.

Le centre de la roue 8 est situé sur l'axe 14 de l'essieu arrière ou l'axe de la fusée arrière. L'axe 14 est horizontal et transversal au véhicule.

Le bras inférieur longitudinal 4 a son extrémité avant 4a situé sur le côté intérieur 11a du longeron 11 au-dessus du plan horizontal contenant l'axe de l'essieu 14, et son extrémité arrière articulée autour de l'axe 13 en dessous dudit plan horizontal. De cette façon, le bras inférieur longitudinal 14 est incliné de l'avant vers l'arrière. L'extrémité avant 4a du bras inférieur longitudinal 4 située plus à l'intérieur du véhicule dans le sens transversal par rapport à son extrémité arrière présente une partie coudée afin de faciliter le montage sur le palier 12 dont l'axe de rotation fait un angle α par rapport au sens longitudinal du véhicule. La direction α du palier élastique 12 permet de privilégier le déplacement longitudinal vers l'arrière en même temps qu'une translation vers l'intérieur du véhicule favorable à l'effet de pince.

La partie arrière du bras inférieur longitudinal 4 présente une ouverture 15 sensiblement transversale. L'amortisseur 1 qui a son extrémité supérieure montée sur le châssis 9 et son extrémité inférieure montée sur le porte-fusée 7 est incliné dans un plan sensiblement transversal, le corps la de l'amortisseur 1 agissant sur un point du porte-fusée 7 situé en dessous de l'ouverture 15 du bras inférieur longitudinal 4. Le corps la de l'amortisseur 1 traverse l'ouverture 15 sans contact mécanique avec celle-ci.

La bielle de carrossage 3 est transversale au véhicule et située au-dessus du plan horizontal passant par l'axe de l'essieu 14. La bielle de carrossage s'articule sur le châssis 9 et sur le porte-fusée 7 afin d'ajuster l'inclinaison du plan de roue 16 par rapport à la verticale. Lorsqu'on augmente la hauteur du point d'articulation 3a de la bielle 3 sur le porte-fusée 7 par rapport à l'axe de l'essieu 14, on améliore l'effet d'ajustage du carrossage de la roue 8. Cependant, le longeron 11 du châssis 9 présente une hauteur prédéterminée et limite la hauteur de la bielle de carrossage 3 qui doit se situer à une certaine distance en dessous du longeron 11 afin d'éviter le choc avec ce dernier, car un tel choc provoquerait inévitablement un changement de carrossage de la roue 8, et modifierait en conséquence le comportement routier du véhicule pendant une courte durée.

Pour résoudre ce problème, on réalise une bielle de carrossage 3 coudée ou cintrée vers le bas au moins pour sa partie se trouvant immédiatement en dessous du longeron 11. De cette manière on peut éviter le choc avec le longeron 11 tout en conservant un point d'articulation 3a entre la bielle de carrossage 3 et le porte-fusée 7 suffisamment haut.

Le bras inférieur transversal 5 est un bras porteur pour le ressort hélicoïdal ou pneumatique 2 de suspension. A cet effet, le bras 5 est pourvu d'un évidement cylindrique 5a qui reçoit l'extrémité inférieure du ressort 2, l'extrémité supérieure du ressort 2 étant en appui sur le châssis 9 du véhicule. Le bras porteur 5 est disposé dans un plan sensiblement horizontal et s'articule d'une part sur le châssis 9 et d'autre part sur le porte-fusée 7 en un point 5b situé en arrière par rapport à l'articulation entre le bras inférieur longitudinal 4 et le porte-fusée 7. Le bras porteur 5 est situé derrière le plan vertical passant par l'axe de l'essieu arrière 14.

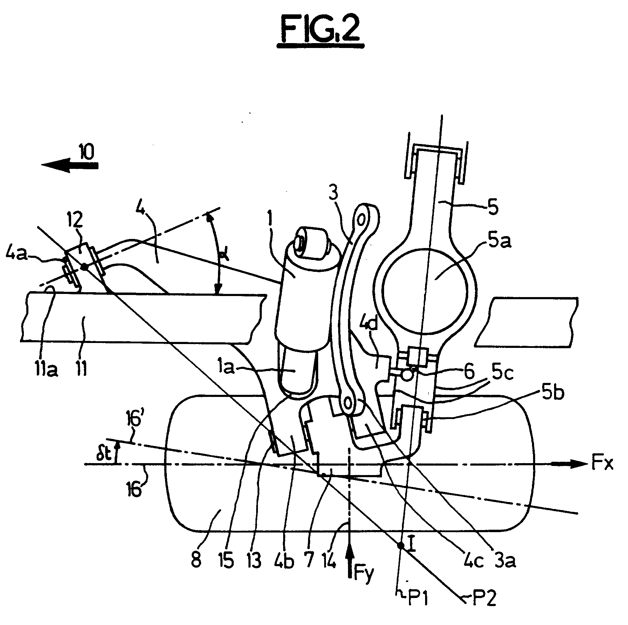

En se référant plus particulièrement à la figure 2, le bras porteur transversal 5 présente ses deux extrémités articulées situées dans un plan vertical P1 qui forme avec le plan P2 passant par le centre d'articulation de l'extrémité avant 4a du bras longitudinal inférieur 4 et le centre d'articulation 4b de l'extrémité inférieure du bras inférieur longitudinal 4 une ligne verticale d'intersection, ladite ligne verticale présentant un point d'intersection I avec le plan horizontal passant par l'axe de l'essieu 14.

Le point I représente le centre instantané de pivotement de la roue 8 par rapport au châssis 9 sous un effort latéral de ripage Fy et/ou un effort longitudinal de freinage Fx. On voit que le centre instantané I se trouve à l'extérieur latéralement du plan de roue 16 et derrière le plan vertical passant par l'axe de l'essieu 14. Il en résulte que le plan de roue 16 présente une dérive δt de valeur négative sous effort Fx et/ou Fy pour venir en position 16'. La roue arrière 8 tend donc à converger vers l'avant du véhicule. Autrement dit, le train arrière gauche tel qu'illustré présente un caractère sous-vireur.

L'extrémité extérieure du bras porteur transversal 5 présente deux joues parallèles 5c dont les extrémités sont montées en articulation par rapport au porte-fusée 7. La biellette de connexion 6 est orientée de façon sensiblement venicale et dont l'extrémité supérieure est en articulation avec le bras porteur transversal 5 dans l'espace entre les deux joues 5c, l'extrémité inférieure de la biellette 6 s'articulant autour du bossage 4d à la partie arrière du bras inférieur longitudinal 4. L'extrémité 5b du bras porteur 5 se trouve en dessous du plan horizontal passant par l'axe de l'essieu 14.

Selon un mode particulier de réalisation de l'invention, la bielle de carrossage supérieure 3, le bras porteur transversal 5 et éventuellement l'amortisseur 1 s'articulent sur une partie d'extrémité d'une traverse 17 de liaison entre le longeron gauche 11 et le longeron droit non représenté du châssis 9 du véhicule.

La biellette de connexion 6 présente l'avantage d'avoir une longueur faible et masquée partiellement par les joues 5c du bras porteur transversal 5 et d'agir entre le bras inférieur longitudinal 4 et le bras porteur transversal 5 qui sont déjà dimensionnés pour reprendre des efforts de flexion. L'extrémité avant 4a du bras inférieur longitudinal 4 est disposée très près du longeron, ce qui permet de dégager du volume en dessous du véhicule entre les deux longerons gauche et droit. Le train arrière présente donc une structure compacte et permet de dégager un espace sous le plancher du véhicule permettant de loger le réservoir d'essence et le dispositif d'échappement de gaz brûlé par le moteur du véhicule. En outre, le bras inférieur longitudinal 4 ajouré (ouverture 15) permet un montage compact de l'amortisseur 1.

De préférence, l'extrémité avant 4a du bras inférieur longitudinal 4 est en liaison d'articulation élastique avec le longeron 11 par l'intermédiaire du palier 12. L'articulation élastique permet un recul du bras inférieur longitudinal 4 par rapport au longeron 11 et par voie de conséquence un recul de la roue 8. La raideur ou l'élasticité de l'articulation de l'extrémité avant 4a du bras inférieur 4 détermine le recul de la roue 8 sous un effort longitudinal Fx de freinage. Le recul de roue est un critère de confort pour le véhicule.

Le train arrière de l'invention présente avantageusement une cinématique à un degré de liberté pour permettre la roue 8 de se déplacer dans le sens vertical dont le mouvement est amorti par l'effort combiné du ressort hélicoïdal ou pneumatique 2 de suspension et de l'amortisseur hydraulique 1. Dans cet objectif, on peut choisir le type d'articulation en fonction du nombre de contraintes de liaison et des corps solides constitutifs du train. A titre d'exemple, la bielle supérieure de carrossage 3, le bras porteur transversal 5 et la biellette de connexion 6 peut comporter à une extrémité une articulation sphérique et à l'autre extrémité une articulation du type cardan. Le bras inférieur longitudinal 4 peut présenter une articulation sphérique à l'extrémité avant 4a et une articulation de révolution à la partie arrière 4b et 4c autour de l'axe 13 solidaire du porte-fusée 7.

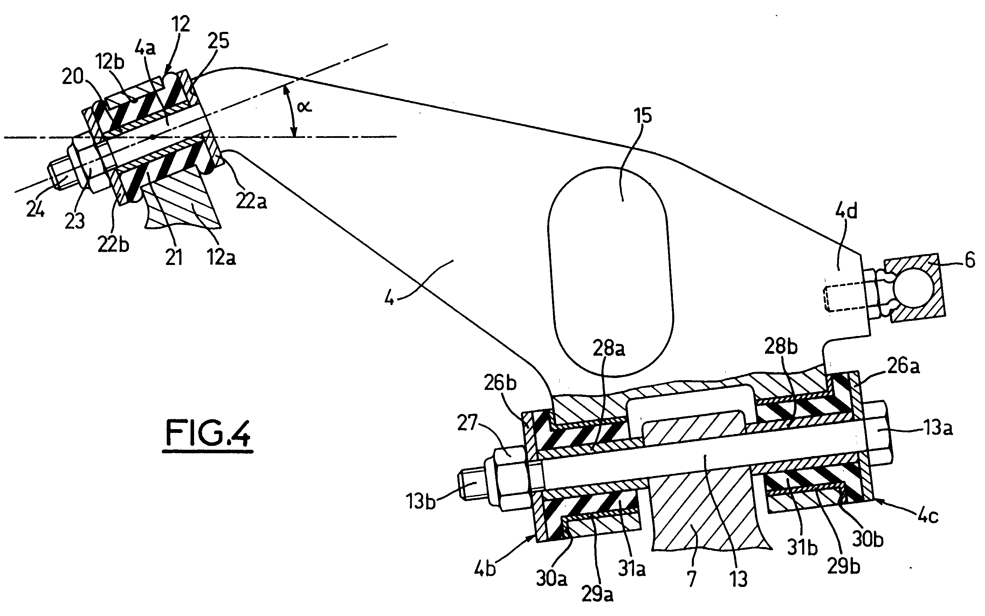

Parmi de nombreux modes possibles, la figure 4 illustre une réalisation des articulations liées au bras inférieur longitudinal 4.

L'extrémité avant 4a du bras 4 est réalisée sous forme d'un goujon qui constitue l'axe du palier élastique 12. Autour du goujon 4a est emmanché un fourreau 20. Le palier élastique 12 est rendu solidaire du longeron 11 via un support 12a qui présente une ouverture cylindrique 12b dans laquelle est placé concentriquement le goujon 4a du bras 4. Entre la surface intérieure de l'ouverture 12b du support 12a et la surface extérieure du fourreau 20 est disposé un manchon élastique déformable 21. Le manchon élastique 21 et le fourreau 20 sont délimités axialement entre deux rondelles 22a et 22b, la fixation axiale étant assurée par un écrou d'extrémité 23 coopérant avec l'extrémité filetée 24 du goujon 4a et avec l'épaulement 25 à la base du goujon.

Les articulations 4b et 4c à la partie arrière du bras 4 présentent une structure comparable à l'articulation 12. L'axe commun 13 est constitué par un boulon dont la tête 13a est en appui sur une rondelle 26a et dont l'extrémité filetée 13b coopère avec un écrou 27 en appui sur une autre rondelle 26b. Le porte-fusée 7 fait saillie entre les articulations 4b et 4c et est traversé par l'axe d'articulation 13. Deux fourreaux tubulaires 28a et 28b sont emmanchés de part et d'autre du porte-fusée 7 sur l'axe 13 et maintenus axialement contre le porte-fusée par les rondelles 26a et 26b. La partie correspondante du bras 4 présente deux ouvertures cylindriques alignées dans lesquelles sont emmanchés des fourreaux fins 29a et 29b pourvus de collets radiaux 30a, 30b. Les fourreaux fins 29a, 29b coopèrent coaxialement avec les fourreaux 28a, 28b et les rondelles 26a, 26b pour maintenir des manchons élastiques déformables 31a, 31b.

La biellette de connexion 6 coopère avec le bossage 4d à l'arrière du bras 4 au moyen d'une liaison sphérique 32 avec sa partie fixe montée sur le bossage 4d à la manière d'un boulon.

Bien entendu, l'invention n'est nullement limitée au mode de réalisation décrit et illustré qui n'a été donné qu'à titre d'exemple.

Au contraire, l'invention comprend tous les équivalents techniques des moyens décrits ainsi que leurs combinaisons si celles-ci sont effectuées suivant son esprit.

## Revendications

1. Train arrière sous-vireur pour véhicules, notamment pour véhicules automobiles, monté entre le châssis (9) du véhicule et le porte-fusée (7) d'une roue arrière et comprenant un amortisseur (1) hydraulique, un ressort hélicoïdal ou pneumatique de suspension, le porte-fusée étant relié au châssis par un bras longitudinal (4), une bielle de carrossage (3) disposée transversalement au véhicule, et un bras inférieur transversal (5) porteur de l'extrémité inférieure du ressort (2), caractérisé en ce que le bras longitudinal coopère avec le porte-fusée par une articulation (4b,4c) d'axe de pivotement sensiblement horizontal, et qu'une biellette de connexion (6), disposée sensiblement verticalement, est montée de façon articulée entre la partie arrière du bras longitudinal et le bras inférieur transversal.

2. Train arrière selon la revendication 1, caractérisé en ce que l'extrémité supérieure de la biellette (6) s'articule sur le bras inférieur transversal (5) dans l'espace formé entre deux joues (5c) de ce dernier.

3. Train arrière selon la revendication 1 ou 2, caractérisé en ce que le bras inférieur longitudinal (4) présente à sa partie arrière un bossage (4b) s'étendant vers l'arrière du véhicule et par rapport à laquelle s'articule la biellette de connexion (6).

4. Train arrière selon l'une quelconque des revendications précédentes, caractérisé en ce que les points d'articulation (4b, 4c; 5b) des bras inférieurs longitudinal (4) et transversal (5) sont situés en dessous du plan horizontal passant par l'axe de l'essieu arrière (14).

5. Train arrière selon l'une quelconque des revendications précédentes, caractérisé en ce que le bras inférieur longitudinal (4) présente à sa partie arrière une ouverture (15) sensiblement transversale et à travers laquelle l'amortisseur (1) agit sur un point du porte-fusée (7) se trouvant en dessous du bras inférieur longitudinal.

6. Train arrière selon l'une quelconque des revendications précédentes, caractérisé en ce que le bras inférieur longitudinal (4) présente son extrémité avant (4a) montée sur le longeron (11) gauche ou droit du véhicule au moyen d'un palier élastique (12) démontable.

7. Train arrière selon l'une quelconque des revendications précédentes, caractérisé en ce que le bras inférieur transversal porteur (5) est situé à l'arrière du plan vertical passant par l'axe de l'essieu arrière (14).

8. Train arrière selon l'une quelconque des revendications précédentes, caractérisé en ce que la bielle de carrossage (3) est au moins partiellement cintrée vers le bas.

9. Train arrière selon l'une quelconque des revendications précédentes, caractérisé en ce que le bras inférieur transversal porteur (5) et la bielle de carrossage (3) s'articulent sur une partie d'extrémité d'une traverse (17) reliant les longerons gauche (11) et droit du châssis (9) du véhicule.

10. Train arrière selon l'une quelconque des revendications 5 à 9, caractérisé en ce que l'amortisseur (1) est monté incliné dans un plan transversal.

11. Train arrière selon l'une quelconque des revendications précédentes, caractérisé en ce que la bielle de carrossage (3), le bras inférieur porteur (5) et la biellette de connexion (6) présentent chacun une extrémité à articulation sphérique et une autre extrémité à articulation du type cardan, et que le bras inférieur longitudinal (4) présente à son extrémité avant (4a) une articulation sphérique et à son extrémité arrière (4b, 4c) une articulation de révolution autour d'un axe horizontal (13) solidaire du porte-fusée (7).

## Claims

1. A rear understeering suspension assembly for vehicles, in particular for motor vehicles, which is mounted between the chassis (9) of the vehicle and the stub axle carrier (7) of a rear wheel and comprising a hydraulic damper (1) and a pneumatic or coil suspension spring, the stub axle carrier being connected to the chassis by a longitudinal arm (4), a camber link (3) disposed transversely with respect to the vehicle and a lower transverse arm (5) carrying the lower end of the spring (2), characterised in that the longitudinal arm co-operates with the stub axle carrier by way of a pivot mounting (4b, 4c) with a substantially horizontal pivot axis, and that a substantially vertically disposed connecting rod (6) is mounted pivotably between the rear part of the longitudinal arm and the lower transverse arm.

2. A rear suspension assembly according to claim 1 characterised in that the upper end of the rod (6) is pivotably connected to the lower transverse arm (5) in the space formed between two side plate portions (5c) of the lower transverse arm.

3. A rear suspension assembly according to claim 1 or claim 2 characterised in that the longitudinal lower arm (4) has in its rear part a boss (4b) extending towards the rear of the vehicle and with respect to which the connecting rod (6) is pivotably mounted.

4. A rear suspension assembly according to any one of the preceding claims characterised in that the pivotal mounting points (4b, 4c; 5b) of the lower longitudinal and transverse arms (4 and 5 respectively) are disposed below the horizontal plane passing through the axis of the rear axle (14).

5. A rear suspension assembly according to any one of the preceding claims characterised in that the lower longitudinal arm (4) has at its rear part a substantially transverse opening (15) through which said damper (1) acts on a point on the stub axle carrier (7) which is below the lower longitudinal arm.

6. A rear suspension assembly according to any one of the preceding claims characterised in that the lower longitudinal arm (4) has its front end (4a) mounted on the left-hand or right-hand longitudinal chassis member (11) of the vehicle by means of a dismantleable elastic bearing (12).

7. A rear suspension assembly according to any one of the preceding claims characterised in that the lower transverse carrier arm (5) is disposed to the rear of the vertical plane passing through the axis of the rear axle (14).

8. A rear suspension assembly according to any one of the preceding claims characterised in that the camber link (3) is at least partially curved downwardly.

9. A rear suspension assembly according to any one of the preceding claims characterised in that the lower transverse carrier arm (5) and the camber link (3) are pivotably mounted to an end part of a transverse portion (17) connecting the left-hand and right-hand longitudinal chassis members (11) of the chassis (9) of the vehicle.

10. A rear suspension assembly according to any one of claims 5 to 9 characterised in that the damper (1) is mounted inclined in a transverse plane.

11. A rear suspension assembly according to any one of the preceding claims characterised in that the camber link (3), the lower carrier arm (5) and the connecting rod (6) each have a spherical pivotal mounting end and another end with a mounting of Cardan type, and that the lower longitudinal arm (4) has a spherical pivotal mounting at its front end (4a) and at its rear end (4b, 4c) a pivotal mounting of revolution about a horizontal axis (13) fixed with respect to the stub axle carrier (7).

## Patentansprüche

1. Hinterradaufhängung mit Untersteuerungstendenz für Fahrzeuge, insbesondere Kraftfahrzeuge, die zwischen dem Fahrgestell (9) des Fahrzeugs und dem Achsschenkel (7) eines Hinterrades angeordnet ist und die einen hydraulischen Stossdämpfer (1) und eine Schraubenfeder oder eine pneumatische Federung aufweist, wobei der Achsschenkel über einen Längslenker (4), eine quer zum Fahrzeug angeordnete Sturzwinkelstange (3) und einen unteren Querlenker (5), der das untere Ende der Feder (2) aufnimmt, mit dem Fahrgestell verbunden ist, dadurch gekennzeichnet, dass der Längslenker mit dem Achsschenkel über ein Gelenk (4b, 4c) zusammenwirkt, dessen Schwenkachse im wesentlichen horizontal verläuft und dass eine Verbindungsstange (6), die im wesentlichen vertikal verläuft, gelenkig zwischen dem hinteren Abschnitt des Längslenkers und dem unteren Querlenker vorgesehen ist.

2. Hinterradaufhängung nach Anspruch 1, dadurch gekennzeichnet, dass das obere Ende der Stange (6) am unteren Querlenker (5) in einem zwischen zwei Wangen (5c) des letzteren gebildeten Raum angelenkt ist.

3. Hinterradaufhängung nach Ansprüchen 1 oder 2, dadurch gekennzeichnet, dass der Längslenker (4) an seinem hinterem Abschnitt einen Vorsprung (4b) aufweist, der sich zum hinteren Teil des Fahrzeugs erstreckt und an dem die Verbindungsstange (6) angelenkt ist.

4. Hinterradaufhängung nach einem der vorhergehenden Ansprüche, dadurch gekennzeichnet, dass die Gelenkstellen (4b, 4c, 5b) des unteren Längslenkers (4) und des Querlenkers (5) unterhalb der waagrechten Ebene liegen, welche die Achse (14) der Hinterachse durchsetzt.

5. Hinterradaufhängung nach einem der vorhergehenden Ansprüche, dadurch gekennzeichnet, dass der untere Längslenker (4) an seinem hinteren Abschnitt eine sich im wesentlichen quer erstreckende Öffnung (15) aufweist, welche vom Stossdämpfer (1) durchsetzt wird, der auf eine Stelle des Achsschenkels (7) einwirkt, die unterhalb des unteren Längslenkers liegt.

6. Hinterradaufhängung nach einem der vorhergehenden Ansprüche, dadurch gekennzeichnet, dass der untere Längslenker (4) an seinem vorderen Ende (4a) am linken oder rechten Träger (11) des Fahrzeugs über ein abnehmbares elastisches Lager (12) angeordnet ist.

7. Hinterradaufhängung nach einem der vorhergehenden Ansprüche, dadurch gekennzeichnet, dass der untere Querlenker (5) hinter der senkrechten Ebene angeordnet ist, welche die Achse (14) der Hinterachse durchsetzt.

8. Hinterradaufhängung nach einem der vorhergehenden Ansprüche, dadurch gekennzeichnet, dass die Sturzwinkelstange (3) wenigstens teilweise nach unten abgebogen ist.

9. Hinterradaufhängung nach einem der vorhergehenden Ansprüche, dadurch gekennzeichnet, dass der untere Querlenker (5) und die Sturzwinkelstange (3) an einem Endabschnitt einer Querstrebe (17) angelenkt sind, welche den linken Längsträger (11) und den rechten Längsträger des Fahrgestells (9) des Fahrzeugs verbindet.

10. Hinterradaufhängung nach einem der Ansprüche 5 bis 9, dadurch gekennzeichnet, dass der Stossdämpfer (1) geneigt in einer Querebene angeordnet ist.

11. Hinterradaufhängung nach einem der vorhergehenden Ansprüche, dadurch gekennzeichnet, dass die Sturzwinkelstange (3), der untere Querlenker (5) und die Verbindungsstange (6) jeweils an einem Ende ein Kugelgelenk aufweisen und jeweils an einem anderen Ende ein Kardangelenk aufweisen und dass der untere Längslenker (4) an seinem vorderen Ende (4a) ein Kugelgelenk aufweist und an seinem hinteren Ende (4b, 4c) ein Drehgelenk um eine waagrechte, mit dem Achsschenkel (7) fest verbundene Achse (13).
